# EUROPEAN PATENT SPECIFICATION

(11) **EP 2 380 949 B1**
(45) Date of publication and mention of the grant of the patent: **03.05.2017**
(21) Application number: 08876686.0
(22) Date of filing: 24.12.2008
(51) Int. Cl.: C10B 53/02, C10J 3/66, C10J 3/46

(54) **HIGH-TEMPERATURE GASIFICATION PROCESS USING BIOMASS TO PRODUCE SYNTHETIC GAS AND SYSTEM THEREFOR**
HOCHTEMPERATUR-VERGASUNGSVERFAHREN UNTER VERWENDUNG VON BIOMASSE ZUR HERSTELLUNG VON SYNTHETISCHEM GAS SOWIE SYSTEM DAFÜR
PROCÉDÉ DE GAZÉIFICATION HAUTE TEMPÉRATURE UTILISANT UNE BIOMASSE POUR PRODUIRE UN GAZ DE SYNTHÈSE ET SYSTÈME ASSOCIÉ

(30) Priority: 28.11.2008 CN 200810236614
(43) Date of publication of application: 26.10.2011
(73) Proprietor: Wuhan Kaidi Engineering Technology Research Institute Co., Ltd., Wuhan, Hubei 430074 (CN)
(72) Inventor: YANG, Zhanchun, Wuhan, Hubei 430074 (CN); ZHANG, Haiqing, Wuhan, Hubei 430074 (CN); CAO, Minxia, Wuhan, Hubei 430074 (CN); CHEN, Anhe, Wuhan, Hubei 430074 (CN); LI, Hong, Wuhan, Hubei 430074 (CN)
(74) Representative: Zeuner, Stefan
(86) International application number: PCT/CN2008/073672
(87) International publication number: WO 2010/060249

(56) References cited:
- CN-A- 1 233 643
- CN-A- 1 931 959
- CN-A- 1 931 959
- CN-A- 101 418 329
- DE-A1- 10 047 787
- DE-C1- 4 342 165
- JP-A- 2004 339 360
- US-A- 4 229 185
- US-A- 4 278 446
- US-A1- 2008 022 595

## Description

### Field of the invention

The present invention relates to a high-temperature gasification method and system for producing synthetic gas by using biomass. The method belongs to the technical field of producing synthetic gas or combustible gas by using biomass. The synthetic gas is a mixture gas which contains CO, H₂ and a variety of carbohydrates that contain carbon, hydrogen and oxygen. The synthetic gas produced by the method according to the present invention can be used for gas turbine power generation systems, fuel cells, synthetic oil, metallurgical and other systems.

### Background of the invention

As dwindling of traditional fossil fuels (coal, oil, and natural gas) reserves and the environmental pollution problems caused by the use of fossil fuels directly threaten human survival and development, attaching importance to development of renewable and environmental friendly energy has become a consensus of governments of all countries. The Biomass is organic matter generated by plants through photosynthesis, which is widely distributed, of considerable volume, and cleaner compared to fossil fuels, with the feature of zero CO₂ emissions, so the biomass is an important renewable energy resource. Through thermo-chemical, biochemical and other methods, the biomass can be transformed to clean gas or liquid fuels for power generation, production of industrial raw materials and chemical products, and with the potential to fully replace fossil fuels as a new energy resource which has become a priority for all countries.

There are many ways to transform biomass into clean gas or liquid fuels, however the gasification technology of the biomass, compared with other technologies, can adapt to broader types of biomass with high expansibility. The gasification process of biomass is a thermal chemical process which transforms the solid biomass raw materials into the mixture gas comprising carbon, hydrogen, oxygen and other elements by the reaction of biomass raw materials and gasification agents (air, oxygen, water vapor, carbon dioxide, etc.) at high temperature. Generally the mixture gas is called synthetic gas. The composition of the synthetic gas generated in the gasification process varies with the nature of the biomass raw materials, the category of gasification agent used in the process, the condition of gasification process, as well as the structure of gasification furnace. The goal of the gasification is to minimize the consumption of biomass raw materials and gasification agent and the tar content in the synthesis gas, at the same time, to maximize the efficiency of gasification system, carbon conversion rate, and the content of active ingredients (CO and H₂) in the synthetic gas. There are many factors affecting gasification goals, which include the type of gasification furnace, the category of gasification agent, the particle size of biomass raw material, the gasification pressure and temperature, the water and ash content of biomass raw material and so on used by the gasification process.

The gasification furnace used in the gasification process can be divided into three classes: fixed bed, fluidized bed and entrained flow bed.

The fixed bed has the following features: simple gasification structure, convenience of operation, flexible operation mode, a long period of time that the solid fuel stays in the bed, a higher rate of carbon conversion, and a wide range of running load which can be between 20% and 110%. But the temperature of the fixed bed is not even and it has less efficiency of heat exchange, low heating value of the synthesis gas at the outlet, and the synthesis gas contains large amounts of tar content.

The fluidized bed has the following features: more convenience of feeding raw materials into the gasification furnace or of discharging ash from the gasification furnace, the temperature being uniform throughout the fluidized bed and being easy to be adjusted. But the fluidized bed is very sensitive to the nature of the raw material. When the cohesiveness, thermal stability, water content and ash fusion point of the raw material change, the fluidized bed is very likely to be abnormal in operation. Furthermore, in order to ensure normal fluidization of the gasification furnace, it needs to keep lower temperature and high tar content in synthesis gas. As the fixed-bed and fluidized bed contain a lot of tar, it is necessary to install some oil cracking and purification equipment in the following process, which makes the gasification process very complex.

The entrained flow bed has a higher operating temperature, the furnace temperature is uniform, and the tar inside is fully cracked. Meanwhile, the entrained flow bed also can be easily amplified, especially applicable to large-scale industrial application. But the entrained flow bed has strict restrictions on the particle size of raw materials used in the gasification process, so the raw materials fed into this bed must be ground super fine.

However, the existing crushing and milling technology is incapable to grind the biomass containing more fibers into the particles which meet the size requirement by the entrained flow bed as described above. This results in that the entrained flow bed cannot be used for the gasification of the biomass raw materials. Tar cracking and processing, as well as the pretreatment of biomass prior to the gasification are the biggest problems of hindering further development of the biomass gasification process.

Chinese Patent Application No. 200510043836.0 proposes a biomass gasification method and of device with low-tar. The proposed technology transforms the biomass into a combustible gas with lower tar by separating the pyrothesis decomposition process of solid biomass and the cracking gasification process. This method has the following drawbacks.

Firstly, all of the pyrolysis gas and charcoal produced by the pyrothesis decomposition process are transported into the combustion zones of the cracking gasification furnace, where an incomplete combustion reaction at about 1000 degrees Celsius (°C). Then, the tar produced by the paralytics decomposition process is cracked with high-temperature. However, although it can reduce the tar content, it also loses a lot of charcoal, resulting in a lower amount of CO in the subsequent reduction reaction and a higher amount of CO₂ in synthesis gas.

Secondly, the temperature of combustion reaction is low, and the temperature at the subsequent reduction becomes lower, and the average temperature of the reduction zone is lower than 700 degrees Celsius, which makes the yields of synthesis gas (CO and H₂) lower (by about 30%).

Thirdly, the ash and non-complete reacted residual carbon treated by the reduction reaction is directly discharged from the system which results in lower carbon conversion rate.

Finally, the cracking gasification furnace used in the method is in a form of the fixed-bed. Because the reduction reaction is an endothermic reaction, when the gasification agents (mainly CO₂ and H₂O) generated by combustion, pass through the red-hot carbon layer at the bottom, it results in a large temperature difference between the upper and lower bed (about 1000°C at the top, and about 500°C at the bottom). It is also an inherent drawback of fixed-bed.

The U.S. Patent No. 6,863,878B2 proposes a method and device for producing synthesis gas from carbonaceous materials. The method also separates the carbonization (or pyrogenation) process and the cracking gasification process. It reduces the tar content generated by the cracking reactions by controlling the carbonization temperature to be lower than 450°F. The method has the following drawbacks. Firstly, the gaseous and solid products produced at carbonization stage are delivered to the reaction coil of the subsequent creaking gasification furnace simultaneously without grinding of solid product, which affects the rate and degree of the gasification reaction. Secondly, the gasification reaction is carried out in the coil that needs to deliver more gas to ensure the moving speed of the reaction materials, so the delivery gas takes away a lot of heat which reduces the efficiency of gasification systems, and also makes the follow-up waste heat utilization system relatively large. Additionally, the manner of reacting inside the coil is incapable to keep the temperature uniformity and goes against the target of project amplification. Thirdly, from the perspective of rational energy use, it is not economical to supply the heat required by gasification and carbonization by the combustion of the clean synthesis gas generated by the system. In addition, the combustion products (mainly CO₂ and H₂O) are directly discharged to the outside of the system without fully taking advantage of the CO₂ and water, which may lead to lower gasification efficiency of the system. Finally, after the fly ash and non-fully reacted residual carbon carried by the synthesis gas are separated by cyclones twice, they are not used any more and are directly discharged to the outside of the system, which results in lower carbon conversion rate of the system.

Chinese Patent Application No. 200610124638.1 proposes a method for producing synthetic gas by combined-cycle gasification at high-temperature from biomass. The method also adopts the combined method of carbonization and high-temperature gasification. This method has the following drawbacks. Firstly, it is of greater security risks in the implementation process of industrialization to adopt self-heating of carbonization furnace or indirect heating by the cycling synthetic gas. In addition, the temperature of pyrogenation in the carbonization furnace increases at a low rate, and the volume of raw materials consumption of the effective systematic gas is high, as well as the overall gasification efficiency is low. Secondly, the powder delivering system by using synthetic gas with 2-level ejection is complex and synthetic gas used in the powder delivering also is an inert gas for the high temperature gasification system, because the inert gas in the high-temperature gasification system will consume more oxygen and effective synthetic gas, compared to the delivery manner with non-inert gas into the high-temperature gasification system, the gasification efficiency is reduced by about 5%∼10%. Finally, the high pressure carbon produced in the carbonization furnace is directly sent into the high-pressure milling machine without depressurization for producing powder after cooling. However, this high-pressure milling process is very difficult to be implemented in the industry.

Based on the above description, we can see that none of the existing gasification technology from biomass or carbonaceous solid fuel is high efficient and low-cost in biomass gasification. At the same time, some of the existing methods separate the cracking process and the gasification process, which is applicable to fit the nature of biomass raw materials and able to reduce the tar content of synthesis gas. But the uniformity of the reactor temperature, enlarging the reactor, reducing the scale of waste heat utilization, reducing consumption of external resources, and increasing the gasification efficiency and carbon conversion rate are the restraints upon the large-scale industrial application of biomass gasification. In particular, currently there is no effective method for the biomass gasification by using entrained-flow bed.

### Summary of the invention

The purpose of this invention is to propose an efficient, low cost method and system for producing synthetic gas by high-temperature gasification from biomass.

Technical solution of the present invention:
The invention provides a method for producing synthesis gas by high-temperature gasification from biomass according to claim 1 comprising the steps of:
   feeding raw material, performing carbonization, charcoal milling, and delivering charcoal powder to the gasification furnace for gasification,
   characterized in that said carbonization comprises directly reacting a combustion of external-offering combustible gas and oxygen in the carbonization furnace, the heat emitted from the reaction being directly provided to the necessary heat of biomass pyrolysis, and producing pyrolysis gas and charcoal from the carbonization furnace.

According to another feature of the method according to this invention for producing synthesis gas by high-temperature gasification from biomass, the temperature of the carbonization furnace is between 400°C and 600°C by adjusting the volume of oxygen, and the burner flame temperature of the carbonization furnace is between 1200°C and 1800°C by adjusting the molar amount of the external-offering combustible gas fed into the carbonization furnace, the molar amount of the external-offering combustible gas being between 1 and 5 times the molar amount of the external-offering combustible gas which completely combusts with the volume of oxygen.

According to another feature of the method according to this invention for producing synthesis gas by high-temperature gasification from biomass, the optimal temperature of the carbonization furnace is between 450°C and 550°C, and the molar amount of the external-offering combustible gas fed into the carbonization furnace is between 1.5 and 3 times the molar amount of the external-offering combustible gas which completely combusts with the volume of oxygen. The process of the charcoal milling comprises reducing the pressure of charcoal to atmospheric pressure through a charcoal depressurized feeding device, and then delivering the charcoal to the milling mechanism for producing charcoal powder, and then delivering the charcoal powder to a pressurized feeding system of the charcoal powder by a carrier gas at atmospheric pressure.

According to another feature of the method according to this invention for producing synthesis gas by high-temperature gasification from biomass, using the pyrolysis gas generated by the carbonization furnace as a carrier gas to deliver charcoal powder to the gasification furnace, the solid-gas ratio of the charcoal powder delivering pipelines is between 0.03 m³/m³ and 0.45 m³/m³ by controlling the volume of the pyrolysis gas for delivering.

According to another feature of the method according to this invention for producing synthesis gas by high-temperature gasification from biomass, the delivering charcoal powder to the gasification furnace for gasification involves a fluidization process, the fluidizing gas being the external-offering combustible gas.

According to another feature of the method according to this invention for producing synthesis gas by high-temperature gasification from biomass, a pyrolysis gas outlet is provided on the top of the carbonization furnace which is connected with the gasification furnace, the pyrolysis gas outlet being equipped with a filter, the external-offering combustible gas being used as a back flushing gas of the filter during normal operation. The invention further provides a high-temperature gasification system for producing pyrolysis gas from biomass using in the methods according the first aspect of the present invention comprising a pressurize feeding system of biomass raw materials, a carbonization furnace, a charcoal milling system, a charcoal delivery system, a gasification furnace and its connecting pipeline and pneumatic delivering system, characterized in that the burner of the carbonization furnace is connected with an external-offering combustible gas pipeline and an oxygen pipeline and a charcoal cooler, a charcoal depressurized feeding system, a milling machine and a pressurized feeding system of charcoal powder are provided successively along the pipeline from the charcoal outlet of the carbonization furnace to the gasification furnace, and the charcoal depressurized feeding system is adapted to reduce the pressure of charcoal to atmospheric pressure. According to another feature of the high-temperature gasification system for producing pyrolysis gas from biomass, a pyrolysis gas outlet is provided on the top of the carbonization furnace which is connected with the gasification furnace, the pyrolysis gas outlet being equipped with a filter, and the connector of back flushing gas of the filter being connected to a pipeline of the external-offering combustible gas.

The advantages of the present invention:
1. The invention adopts the technology of direct combustion of the external-offering combustible gas and oxygen as heating technology of carbonization furnace. The external-offering combustible gas can be an external-offering natural gas or exhaust gas containing hydrocarbons generated by other systems. The heating technology of carbonization furnace adopted by this invention has the following three features. Firstly, the combustible gas is supplied to the system from the outside. Secondly, the heat required by the carbonization process is supplied by the direct combustion of the external-offering combustible gas and oxygen by using the chemical energy of combustible gas. Thirdly, due to direct combustion, the efficiency in heating the carbonization furnace is high, and therefore the carbonization process can be carried out in the manner of fast pyrolysis. There are three main differences between the method according to the present invention and the method for producing synthetic gas from biomass using combined-cycle high-temperature gasification (hereinafter referred to as the combined-cycle gasification method) proposed by the Chinese Patent Application No. 200610124638.1. Firstly, the combustible gas (namely the synthetic gas) supplying heat for carbonization furnace of the combined-cycle gasification method is generated by the system itself. Secondly, the combined-cycle gasification method uses the sensible heat of combustible gas to provide the required heat of biomass carbonization by indirect heat exchange. Thirdly, the manner of indirect heating has low heat exchange rate and its implementation is complex resulting in a low rate of temperature increase of raw materials, and the carbonization process is slow pyrolysis. Therefore, the heating method of carbonization furnace used in the present invention is essentially different from that used in the combined-cycle gasification method. The method according to the present invention improves the situation of the combined-cycle gasification method, such as low pyrothesis rate, bad heating performance of carbonization furnace and so on. Meanwhile, compared to the traditional gas device, the present invention is also essentially different in the manner and purpose of using combustible gas. In summary, the method according to the present invention breaks the industry's force of habit, adopts the external-offering combustible gas, direct combustion, fast pyrolysis carbonization, and it also has solved a series of technical problems brought by the adopted manner, broke the technical bottleneck hindering the application of biomass for producing synthesis gas, and significantly increased the gasification rate of the system, reduced the oxygen consumption of the effective synthesis gas, as well as improved the energy conversion rate of the entire system.
   The method according to the present invention uses external-offering combustible gas to control the temperature of carbonization furnace, burner flame temperature of carbonization furnace, temperature increase rate by adjusting the ratio of the external-offering combustible gas and oxygen into the carbonization furnace. The present invention has achieved the following three main purposes. Firstly, provide the biomass for carbonization (or pyrolysis) with the heat emitted from combustion of combustible gas and oxygen. Secondly, if the combustible gas is in excess, the excess part of combustible gas, for the combustion reaction, is equivalent to an inert gas. So, the excess part of combustible gas, due to the change of its sensible heat, can absorb part of the released heat of the combustion, and then the burner flame temperature of carbonization furnace is reduced. If other inert gas that does not contain hydrocarbons is used to reduce the burner flame temperature of carbonization furnace, it will lead to a large amount of inert gas going into the gasification system resulting in the reduced system efficiency and the lower quality of the synthesis gas. Thirdly, in terms of the utilization manner of the chemical energy of the combustible gas, as the combustible gases is in excess, only a part of the chemical energy of the combustible gases is used in the carbonization furnace, the left part of the chemical energy of the combustible gas can be continually used in the gasification furnace. Thus, by bringing in the external-offering combustible gas, the method according to the present invention can effectively improve the gasification efficiency of the system, reduce oxygen consumption of the effective synthetic gas and improve the energy conversion rate of the entire system. Compared with the combined-cycle gasification method, the method according to this invention can increase the gasification efficiency by 1% or more, and reduce the oxygen resumption of effective synthetic gas (the molar mass of oxygen consumption for producing one mole of CO and H₂) to less than 0.3mol / mol.
2. The method according to the present invention uses pyrolysis gas to deliver charcoal powder. However, the method of the traditional dry charcoal powder gasification uses inert gas (carbon dioxide or nitrogen) to deliver charcoal powder so that a large amount of inert gas gets into the gasification furnace, which will certainly lead the gasification furnace to consume more oxygen and effective synthesis gas for maintaining the gasification temperature and make the gasification efficiency reduced and the oxygen consumption of effective synthesis gas increased. Compared with the Shell coal gasification, the oxygen consumption of effective synthesis gas of the method according to the present invention can be reduced by 10∼20%. Compared with the combined-cycle gasification method, the gasification efficiency of the method according to the present invention can be increased by 5∼10%.
3. The method according to the present invention adopts combustible gas to fluidize the charcoal powder. Firstly, it avoids bridging or blocking of the charcoal powder during the fluidization process. Secondly, it avoids the pressurized inert gas going into high-temperature gasification system during the charcoal powder feeding process which can degrade the quality of synthesis gas and the gasification efficiency. Furthermore, it also prevents the pyrothesis gas for delivering the charcoal powder from entering into the pressurized charcoal powder feeding system, resulting in condensation of pyrothesis gas. In addition, through the introduction of high-quality gas, it avoids the inert gas getting into the gasification furnace as in the case of the traditional dry coal gasification, which uses inert gas to fluidize the charcoal powder, and it effectively improves the quality of synthesis gas and gasification efficiency.
4. The method according to the present invention uses combustible gas as the equipment purging gas during its normal operation. The traditional coal gasification system generally uses inert gas as equipment purging and back flushing gas during its normal operation. If the purging frequency is too high, it will lead more inert gas to be brought into the gasification furnace and degrade the quality of synthesis gas. If the external-offering combustible gas is adopted as purging gas, it will not only avoid the above issues, but also improve the quality of synthesis gas.
5. The method according to the present invention adopts the technology of raw material depressurized feeding and atmospheric pressure charcoal milling. As compared with the high-pressure milling technology adopted by the combined-cycle high-temperature gasification method for producing synthetic gas from biomass proposed by the Chinese Patent Application No. 200610124638.1, the high-pressure milling technique is feasible in theory, but there are many technical difficulties in the engineering realization, such as the sealing problems under high-pressure, safety issues of high-pressure equipments caused by vibration, so it is difficult to be implemented. However, the technology adopted by the method according to the present invention is more easily implemented in engineering, is safer, and more reliable.

### Brief Description of the Drawing

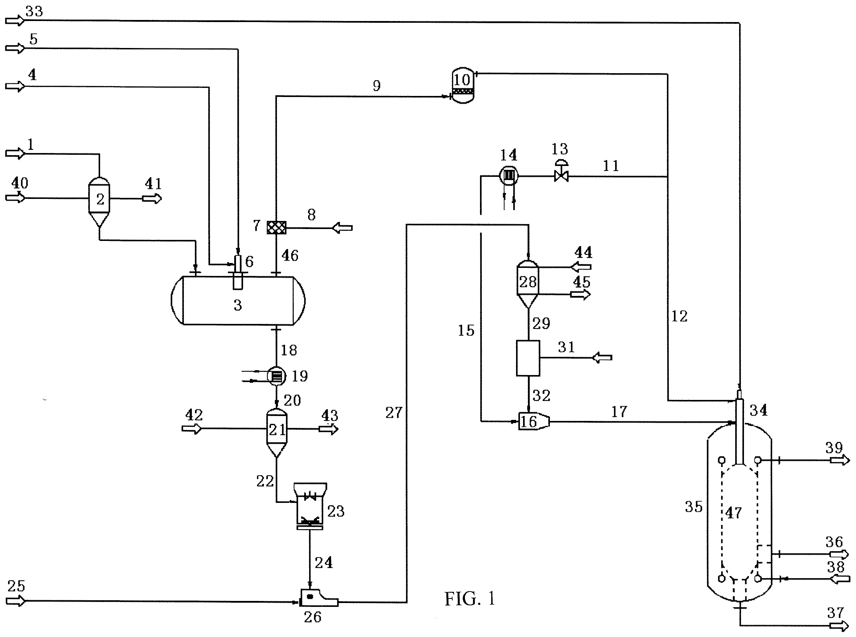

Figure 1 shows a schematic diagram of a process according to the present invention and its system.

### Detailed Description

The preferred examples, the process and the system layout structure according to the present invention, are described with reference to Figure 1.

With reference to Fig. 1, the gasification system for producing synthetic gas from biomass by high-temperature gasification includes biomass raw material 1; a pressurized feeding system of biomass raw materials 2; a carbonization furnace 3; a combustible gas pipeline 4 to a carbonization furnace burner; an oxygen pipeline 5 to a carbonization furnace burner; a carbonization furnace burner 6; a filter 7; a back flushing gas pipeline 8 of the filter; a pyrothesis gas pipeline 9 of the outlet of the filter; a pyrolysis gas buffer tank 10; a pyrothesis gas pipeline 11 that delivering charcoal powder; a pyrolysis gas pipeline 12 to the gasification furnace burner; a regulating valve 13; a pyrolysis gas heater 14; a heated pyrolysis gas pipeline 15; a charcoal powder ejector 16; a mixture gas pipeline 17 of charcoal powder and the pyrolysis gas; a charcoal discharge pipeline 18 of the carbonization furnace; a charcoal cooler 19; a cooled charcoal pipeline 20; a depressurized feeding system of charcoal 21; an atmospheric pressure pipeline of charcoal 22; a milling machine 23; a charcoal powder pipeline 24; an atmospheric pressure gas delivering pipeline 25; an atmospheric pressure pneumatic delivering system 26; a pipeline 27 delivering the mixture of gas and charcoal powder at atmospheric pressure; a pressurized feeding system of charcoal powder 28; a high-pressure charcoal powder pipeline 29; a charcoal powder fluidizing device 30; a fluidizing gas pipeline 31; a fluidized charcoal powder pipeline 32; an oxygen pipeline 33 to the gasification furnace burner; a gasification furnace burner 34; a gasification furnace 35; a synthetic gas pipeline 36; an ash pipeline 37; a desalted and deoxygenated water pipeline 38; a saturated water vapor pipeline 39; a pressurized gas feeding pipeline 40 of the raw materials pressurization system; a depressurized gas pipeline 41 of the raw materials pressurization system; a pressurized gas pipeline 42 of the charcoal feeding system; a depressurized gas pipeline 43 of the charcoal powder feeding system; a pressurized gas feeding pipeline 44 of the charcoal powder feeding system; a depressurized gas pipeline 45 of the charcoal powder feeding system; a cracking pipeline 46 of the carbonization furnace outlet; a water cooled wall 47 of the gasification furnace.

The carbonization furnace burner 6 is connected with the combustible gas pipeline 4 and the oxygen pipeline 5. Along the pipeline from the charcoal outlet of carbonization furnace to the gasification furnace, there are provided a charcoal cooler 19, a depressurized feeding system of charcoal 21, a milling machine 23, and a pressurized feeding system of charcoal powder 28. The charcoal powder delivery uses the charcoal powder ejector 16 which is connected with the delivering pipeline of pyrolysis gas and charcoal powder pipeline. On the top of the carbonization furnace, there is provided a pyrolysis gas outlet which is connected with the gasification furnace. The outlet is equipped with the filter 7 of which the back flushing gas connector is connected with the combustible gas pipeline 8.

The biomass raw material 1 goes into the pressurized feeding system 2 after its desiccation, and is delivered to the carbonization furnace 3 by pneumatic pressurization technology; external-offering combustible gas and oxygen are supplied into the carbonization furnace 3 through the pipeline 4 and the pipeline 5 from outside, and the combustion reaction occurs from which the released heat meets the required heat for cracking of the biomass raw materials. The temperature of the carbonization furnace 3 is controlled between 400°C and 600°C by adjusting the volume of oxygen. And the temperature of the carbonization furnace burner flame is controlled below 1800°C by adjusting the volume of external-offering combustible gas between 1 to 5 times the molar mass of the combustible gas which complete combusts with the given volume of oxygen. The products of the carbonization furnace 3 are charcoal and pyrolysis gas which contains CO, H₂, CO₂, H₂O, CH₄, tar and so on. The crude pyrolysis gas is delivered to the filter 7 through the pipeline 46, after separation, the solid particles containing carbon in the crude pyrolysis gas returns to the carbonization furnace 3 through the pipeline 46, while the clean pyrolysis gas is delivered to the pyrolysis gas buffer tank 10 through the pipeline 9.

A part of the pure pyrolysis gas from the pyrolysis gas buffer tank 10 enters into the pyrolysis gas heater 14 through the pipeline 11 and the regulating valve 13, then the temperature of pyrolysis gas is increased to 550∼650°C. The heated pyrolysis gas is used as a carrier gas of charcoal powder and enters into the charcoal powder ejector 16 through the pipeline 15, and the solid-gas ratio in the pipeline 17 is controlled between 0.03 and 0.45 m³/m³ by adjusting the valve 13.

The other part of the pure pyrolysis gas from the pyrolysis gas buffer tank 10 is delivered to the gasification furnace burner 34 through the pipeline 12 with oxygen through the pipeline 33. The charcoal powder and the mixture gas delivering pyrolysis gas are delivered to the gasification furnace 34 through the pipeline 17. Then high-temperature gasification reaction occurs in the gasification furnace 35. The temperature of the outlet of the gasification furnace 35 is controlled between 1200 and 1600°C by adjusting the amount of oxygen and the heat exchange of the water cooled wall 47 filled with desalted and deoxygenated water. The main products of gasification are CO and H₂, a small amount of CO₂, H₂O, and trace amounts of CH₄. Among them, the sub-high pressure saturated vapor is generated from the desalted and deoxygenated water after being cooled by the water cooled wall 47 and then enters into the follow-up system through the pipeline 39, and the ash generated by gasification is discharged through the pipeline 37.

The charcoal produced by the carbonization furnace 3 is first cooled down to the required operating temperature of the depressurized feeding system of charcoal 21 by the charcoal cooler 19, and then it is delivered to the milling machine 23 for producing charcoal powder after its depressurization by the depressurized feeding system of charcoal 21. After that, it is delivered to the atmospheric pressure pneumatic delivering system 26 through the pipeline 24. Then, the charcoal powder is delivered to the pressurized feeding system of charcoal powder 28 by the atmospheric pressure delivering gas (carbon dioxide or nitrogen) of the pipeline 25. The pressure of the charcoal powder in the pressurized feeding system of charcoal powder 28 is increased to the operating pressure of the gasification furnace 35 by pneumatic pressurization technology. The high-pressure charcoal powder enters into the fluidizing device 30 through the pipeline 29. The charcoal powder in the feeding pipeline 29 is fluidized by the external-offering combustible gas through the pipeline 31, and further enters to the charcoal powder ejector 16 through the pipeline 32. Then, it is delivered to the gasification furnace 35.

### Embodiment 1 :

In this embodiment, the biomass material is, for example, wood. The elemental analysis and characteristics data of dried wood is shown in Table 1:

**Table 1. Elemental analysis and characteristics data of dried wood**

| Composition | Symbol | unit | Value |
|---|---|---|---|
| Carbon | *C*ₐᵣ | *%(kg*/*kg)* | 39.43 |
| Hydrogen | *H*ₐᵣ | *%(kg*/*kg)* | 5.21 |
| Oxygen | *O*ₐᵣ | *%(kg*/*kg)* | 38.3 6 |
| Nitrogen | *N*ₐᵣ | *%(kg*/*kg)* | 0.15 |
| Sulfur | *S*ₐᵣ | *%(kg*/*kg)* | 0.21 |
| Chlorine | *Cl*ₐᵣ | *%(kg*/*kg)* | 0.00 |
| Ash | *A*ₐᵣ | *%(kg*/*kg)* | 5.00 |
| Water | *M*ₐᵣ | *%(kg*/*kg)* | 11.6 4 |
| Ash fusion point | *FT* | *°C* | 143 6 |
| Low heat value | *LHV* | *MJ*/*kg* | 14.7 5 |

Taking natural gas as the external-offering combustible gas, for example, the elemental analysis and characteristics data of nature gas are shown in Table 2:

**Table 2. Elemental analysis and characteristics data of natural gas**

| Composition | Value |
|---|---|
| CH₄ | 91.746% |
| C₂H₆ | 4.480% |
| C₃H₈ | 2.257% |
| CO₂ | 0.070% |
| O₂ | 0.040% |
| N₂ | 1.406% |
| Concentration of H₂S (mg/Nm³) | 20.00 |
| Low heat value (kcal/m³) | 9000.8 |

The main technical operating conditions are set as follows:
1) The biological mass of the biomass of the raw materials 1 being delivered to the carbonization furnace 3 through the pressurized feeding system 2 is controlled at 4.07kg/s.
2) The pressure of the carbonization furnace 3 is controlled at 3.1MPa, and its temperature controlled at 500°C;
3) The volume of the external-offering combustible gas entering into the gasification furnace is adjusted at 2 times the molar amount at complete combustion with oxygen;
4) The temperature increasing rate of raw materials in the carbonization furnace 3 is controlled at 50°C /s;
5) High temperature charcoal is cooled down to 80°C by the charcoal cooler 19;
6) The pyrolysis gas is heated to 600°C by the pyrolysis gas heater 14;
7) The solid-gas ratio in the pipeline 17 is controlled at 0.03m³/m³;
8) The pressure of the gasification furnace 35 is controlled at 3.0MPa, and its temperature at 1300°C.

Based on the above conditions, and combined with the figures, we will describe the embodiment of the present invention and the main material flow data and performance parameters of the system are as follows:
1) The mass flow rate of 40°C combustible gas introduced to the carbonization furnace 3 is 0.28kg/s;
2) The mass flow rate of 160°C oxygen introduced to the carbonization furnace 3 is 0.63kg/s;
3) The flame temperature of the carbonization furnace burner 6 is 1800°C;
4) The total pyrolysis gas generated by the carbonization furnace 3 is 3.69kg/s;
5) The total charcoal generated by the carbonization furnace 3 is 1.19kg/s;
6) The temperature of the combustible gas delivered through the pipeline 31 for fluidizing charcoal powder is 300°C and its mass flow rate is 0.03kg/s;
7) The mass flow rate of pyrolysis gas for delivering charcoal powder in the pipeline 11 is 0.89kg/s;
8) The mass flow rate of the mixture gas for delivering pyrolysis gas and charcoal powder in the pipeline 17 is 2.1kg/s;
9) The mass flow rate of the pyrolysis gas in the pipeline 12 entering directly into the gasification furnace 35 is 2.8kg/s;
10) The temperature of oxygen introduced into the gasification furnace 35 through the pipeline 33 is 160°C and the mass flow rate is 1.5kg/s;
11) The total output of synthesis gas from the pipeline 36 is 6.5kg/s, and the dry basis content of CO and H₂ is 87.2%;
12) The carbon conversion rate of the system is 99.9%, and the oxygen consumption amount of effective synthetic gas is 0.3mol/mol.

### Embodiment 2 :

Taking wood of Embodiment 1 as the biomass raw material (Table 1) and using natural gas as a combustible gas (Table 2), the temperature of the carbonization furnace 3 is controlled at 600°C and the pyrolysis temperature increasing rate of the raw materials in the carbonization furnace 3 is controlled at 100°C /s, and other major technical operating conditions are the same as those of Embodiment 1.

Based on the above conditions, and combined with the figure, we will describe the embodiment of the present invention and the main material flow data and performance parameters of the system are as follows:
1) The mass flow rate of 40°C combustible gas introduced to the carbonization furnace 3 is 0.33kg/s;
2) The mass flow rate of 160°C oxygen introduced to the carbonization furnace 3 is 0.63kg/s;
3) The flame temperature of the carbonization furnace burner 6 is 1700°C;
4) The total pyrolysis gas generated by the carbonization furnace 3 is 3.84kg/s;
5) The total charcoal generated by the carbonization furnace 3 is 1.19kg/s;
6) The temperature of the combustible gas delivered through the pipeline 31 for fluidizing charcoal powder is 300°C and its mass flow rate is 0.03kg/s;
7) The mass flow rate of pyrolysis gas for delivering charcoal powder in the pipeline 11 is 0.89kg/s;
8) The mass flow rate of the mixture gas for delivering pyrolysis gas and charcoal powder in the pipeline 17 is 2.1kg/s;
9) The mass flow rate of the pyrolysis gas in the pipeline 12 entering directly into the gasification furnace 35 is 2.96kg/s;
10) The temperature of oxygen introduced into the gasification furnace 35 through the pipeline 33 is 160°C and its mass flow rate is 1.5kg/s;
11) The total output of synthesis gas from the pipeline 36 is 6.6kg/s, and the dry basis content of CO and H₂ is 87.5%;
12) The carbon conversion rate of the system is 99.9%, and the oxygen consumption amount of effective synthetic gas is 0.308mol/mol.

### Embodiment 3:

Still taking wood of Embodiment 1 as the biomass raw material (Table 1), using natural gas as combustible gas (Table 2), and adjusting the volume of external-offering combustible gas at 5 times of the molar mass completely reacted with offered oxygen, other major technical operating conditions are the same as those of Embodiment 1.

Based on the above conditions, and combined with the figure, we will describe the embodiment of the present invention and the main material flow data and performance parameters of the system are as follows:
1) The mass flow rate of 40°C combustible gas introduced to the carbonization furnace 3 is 0.78kg/s;
2) The mass flow rate of 160°C oxygen introduced to the carbonization furnace 3 is 0.604kg/s;
3) The flame temperature of the carbonization furnace burner 6 is 1200°C;
4) The total pyrolysis gas generated by the carbonization furnace 3 is 4.3kg/s;
5) The total charcoal generated by the carbonization furnace 3 is 1.19kg/s;
6) The temperature of the combustible gas delivered through the pipeline 31 for fluidizing charcoal powder is 300°C and its mass flow rate is 0.02kg/s;
7) The mass flow rate of pyrolysis gas for delivering charcoal powder in the pipeline 11 is 0.89kg/s;
8) The mass flow rate of the mixture gas for delivering pyrolysis gas and charcoal powder in the pipeline 17 is 2.1kg/s;
9) The mass flow rate of the pyrolysis gas in the pipeline 12 entering directly into the gasification furnace 35 is 3.4kg/s;
10) The temperature of oxygen introduced into the gasification furnace 35 through the pipeline 33 is 160°C and the mass flow rate is 2.05kg/s;
11) The total output of synthesis gas from the pipeline 36 is 7.6kg/s, and the dry basis content of CO and H₂ is 90.4%;
12) The carbon conversion rate of the system is 99.9%, and the oxygen consumption amount of effective synthetic gas is 0.295mol/mol.

### Embodiment 4 :

Still taking wood of Embodiment 1 as the biomass raw material (Table 1) and using natural gas as combustible gas (Table 2), controlling the temperature of the carbonization furnace 3 at 400°C and the charcoal cooler 19 cools the high-temperature charcoal down to 200°C, other major technical operating conditions are the same as those of Embodiment 1.

Based on the above conditions, and combined with the figure, we will describe the embodiment of the present invention and the main material flow data and performance parameters of the system are as follows:
1) The mass flow rate of 40°C combustible gas introduced to the carbonization furnace 3 is 0.23kg/s;
2) The mass flow rate of 160°C oxygen introduced to the carbonization furnace 3 is 0.44kg/s;
3) The flame temperature of the carbonization furnace burner 6 is 1800°C;
4) The total pyrolysis gas generated by the carbonization furnace 3 is 3.55kg/s;
5) The total charcoal generated by the carbonization furnace 3 is 1.19kg/s;
6) The temperature of the combustible gas delivered through the pipeline 31 for fluidizing charcoal powder is 300°C and its mass flow rate is 0.03kg/s;
7) The mass flow rate of pyrolysis gas for delivering charcoal powder in the pipeline 11 is 0.833kg/s;
8) The mass flow rate of the mixture gas for delivering pyrolysis gas and charcoal powder in the pipeline 17 is 2.04kg/s;
9) The mass flow rate of the pyrolysis gas in the pipeline 12 entering directly into the gasification furnace 35 is 2.72kg/s;
10) The temperature of oxygen introduced into the gasification furnace 35 through the pipeline 33 is 160°C and the mass flow rate is 1.5kg/s;
11) The total output of synthesis gas from the pipeline 36 is 6.3kg/s, and the dry basis content of CO and H₂ is 87.1%;
12) The carbon conversion rate of the system is 99.9%, and the oxygen consumption amount of effective synthetic gas is 0.3mol/mol.

### Embodiment 5 :

Still taking wood of Embodiment 1 as the biomass raw material (Table 1) and using natural gas as combustible gas (Table 2), the pyrolysis gas heater 14 heats the pyrolysis gas to 650°C, and controls the solid-gas ratio in the pipeline 17 at 0.45m³/m³, other major technical operating conditions are the same as those of Embodiment 1.

Based on the above conditions, and combined with the figure, we will describe the embodiment of the present invention and the main material flow data and performance parameters of the system are as follows:
1) The mass flow rate of pyrolysis gas for delivering charcoal powder in the pipeline 11 is 0.63kg/s;
2) The mass flow rate of the mixture gas for delivering pyrolysis gas and charcoal powder in the pipeline 17 is 1.8kg/s;
3) The mass flow rate of the pyrolysis gas in the pipeline 12 entering directly into the gasification furnace 35 is 3.1kg/s;
4) The temperature of oxygen introduced into the gasification furnace 35 through the pipeline 33 is 160°C and the mass flow rate is 1.5kg/s;
5) The total output of synthesis gas from the pipeline 36 is 6.5kg/s, and the dry basis content of CO and H₂ is 87.2%;
6) The carbon conversion rate of the system is 99.9%, and the oxygen consumption amount of effective synthetic gas is 0.3mol/mol.

### Analysis of the results:

### 1) The effect on the results by the temperature adjustment of the carbonization furnace:

When the carbonization temperature is below 400°C, the pyrolysis gas generated by the carbonization furnace contains more tar content and in the case of delivering the charcoal powder with pyrolysis gas, it may result in condensation of pyrolysis gas, affecting the stable operation of the charcoal delivering system. When the carbonization temperature is higher than 600°C, the ordinary alloy steel material may not be able to withstand such high temperature, however using special alloy materials may increase the cost of investment of the carbonization furnace.

### 2) The effect on the results by changing the amount of external-offering combustible gas fed into the carbonization furnace:

If the combustible gas and oxygen fed into the carbonization furnace are completely combusted, then the carbonization furnace burner flame temperature will be over 2000°C. If the system runs under such high temperature for a long time, it will result in damage to the internal mechanical components of the carbonization furnace and will cause safety accidents. With increasing the amount of combustible gases, the carbonization furnace burner flame temperature will gradually decrease. When the amount of combustible gases reaches 5 times the amount of combustible gas consumed at complete combustion, the carbonization furnace burner flame temperature will decrease to 1200°C. Further increasing the amount of combustible gas fed into the carbonization furnace, the carbonization furnace burner flame temperature can be further reduced; however it may result in increasing of the gas flow rate at the outlet of the carbonization furnace burner which makes the combustion unstable. In addition, it may also result in sharply increasing of CH₄ at the outlet of the gasification furnace. In this case, the only way to reduce CH₄ content is to increase the gasification temperature, but higher gasification temperature will result in increasing the investment cost of the gasification furnace.

### 3) The effect on the results by changing the solid-gas ratio in the pipeline used for delivering charcoal powder by pyrolysis gas:

When the solid-gas ratio is below 0.03m³/m³, the pyrolysis gas used for delivering charcoal powder will take a larger proportion in the total pyrolysis gas, and the amount of the pyrolysis gas combusting with oxygen in the gasification furnace will be reduced, and this might affect the stable operation of the gasification furnace burner. When the solid-gas ratio is higher than 0.45m³/m³, the charcoal powder may deposit and embolize during the delivery of the charcoal powder by pyrolysis gas, which results in the fluctuation of the amount of charcoal powder entering into the gasification furnace burner, and affecting the stable operation of gasification furnace.

### 4) The effect on the results by the changing of the temperature at the charcoal cooler outlet:

When the charcoal temperature at the charcoal cooler outlet is below 60°C, it may increase the heat exchange area and volume of the charcoal cooler, which increases the investment cost. In addition, the lower the temperature of the charcoal cooler, the more the system efficiency will be reduced. When the charcoal temperature at the charcoal cooler outlet is higher than 200°C, it may lead to the malfunction of certain devices of the charcoal feeding system.

## Claims

1. A high-temperature gasification method for producing synthetic gas from biomass, in which the temperature of the outlet of the gasification furnace is controlled between 1200 and 1600°C,
comprising the steps of:
feeding raw material, performing carbonization, charcoal milling, and delivering charcoal powder to the gasification furnace (3) for gasification,
**characterized in that** said carbonization comprises directly reacting a combustion of externally offered combustible gas and oxygen in the carbonization furnace (3), the heat emitted from the reaction being directly provided to the necessary heat of biomass pyrolysis, and producing pyrolysis gas and charcoal from the carbonization furnace (3),
wherein the process of said charcoal milling comprises reducing the pressure of charcoal to atmospheric pressure through a charcoal depressurized feeding device (21), and then delivering the charcoal to a milling mechanism (23) for producing charcoal powder, and then delivering the charcoal powder to a pressurized feeding system (28) of the charcoal powder by a carrier gas at atmospheric pressure.

2. Method according to claim 1, **characterized in that** the temperature of said carbonization furnace (3) is between 400 °C and 600 °C by adjusting the volume of oxygen, and the burner flame temperature of said carbonization furnace (3) is between 1200 °C and 1800 °C by adjusting the molar amount of said externally offered combustible gas fed into the carbonization furnace (3), the molar amount of said externally offered combustible gas being between 1 and 5 times the molar amount of said externally offered combustible gas which completely combusts with said volume of oxygen.

3. Method according to claim 2, **characterized in that** the temperature of said carbonization furnace (3) is between 450 °C and 550 °C by adjusting the volume of oxygen, and the molar amount of said externally offered combustible gas fed into the carbonization furnace (3) is between 1.5 and 3 times the molar amount of said externally offered combustible gas which completely combusts with said volume of oxygen.

4. Method according to claim 1 or 2, **characterized in that** using the pyrolysis gas generated by the carbonization furnace (3) as a carrier gas to deliver charcoal powder to the gasification furnace (35), the solid-gas ratio of the charcoal powder delivering pipelines is between 0.03 m³/m³ and 0.45 m³/m³ by controlling the volume of the pyrolysis gas for delivering.

5. Method according to claim 1 or 2, **characterized in that** said delivering charcoal powder to the gasification furnace (35) for gasification involves a fluidization process, the fluidizing gas being the externally offered combustible gas.

6. Method according claim 1 or 2, **characterized in that** a pyrolysis gas outlet is provided on the top of the carbonization furnace which is connected with the gasification furnace (3), the pyrolysis gas outlet being equipped with a filter (7), the externally offered combustible gas being used as a back flushing gas of the filter (7) during normal operation.

7. A high-temperature gasification system for producing synthetic gas from biomass by using the method of one of claims 1 to 6, in which the temperature of the outlet of the gasification furnace is controlled between 1200 and 1600°C, the system comprising a pressurize feeding system (2) of biomass raw materials, a carbonization furnace (3), a charcoal milling system (23), a charcoal delivery system (28), a gasification furnace (35) and its connecting pipeline and pneumatic delivering system, wherein the carbonization furnace burner (6) of said carbonization furnace (3) is connected with an externally offered combustible gas pipeline (4) and an oxygen pipeline (5), and wherein
a charcoal cooler (19), a charcoal depressurized feeding system (21), the charcoal milling system (23) and a pressurized feeding system of charcoal powder (28) are provided successively along the pipeline from the charcoal outlet of the carbonization furnace (3) to the gasification furnace (35),and wherein the charcoal depressurized feeding system (21) is adapted to reduce the pressure of charcoal to atmospheric pressure.

8. System according to claim 7, **characterized in that** a pyrolysis gas outlet is provided on the top of the carbonization furnace (3) which is connected with the gasification furnace (35), the pyrolysis gas outlet being equipped with a filter (7), and the connector of back flushing gas of the filter (7) being connected to a pipeline (8) of the externally offered combustible gas.

## Patentansprüche

1. Hochtemperaturvergasungsverfahren zur Herstellung von synthetischem Gas aus Biomasse, wobei die Temperatur des Auslasses des Vergasungsofens auf zwischen 1200 und 1600 °C reguliert ist,
umfassend die Schritte:
Zuführen von Rohmaterial, Ausführen von Carbonisierung, Mahlen von Carbonisierungskohle und Liefern von Carbonisierungskohlepulver zum Vergasungsofen (3) zum Vergasen,
**dadurch gekennzeichnet, dass** die Carbonisierung das direkte Reagieren einer Verbrennung von extern angebotenem brennbarem Gas und Sauerstoff in dem Carbonisierungsofen (3) umfasst, wobei die Wärme, die aus der Reaktion abgegeben wird, direkt für die notwendige Biomassepyrolysewärme bereitgestellt wird, und weiter die Herstellung von Pyrolysegas und Carbonisierungskohle aus dem Carbonisierungsofen (3),
wobei der Vorgang des Carbonisierungskohlemahlens das Reduzieren des Carbonisierungskohledrucks auf Atmosphärendruck durch eine druckabgebaute Carbonisierungskohlezufuhrvorrichtung (21) und dann das Liefern der Carbonisierungskohle an einen Mahlmechanismus (23) zum Herstellen von Carbonisierungskohlepulver und dann das Liefern des Carbonisierungskohlepulvers an ein unter Druck gesetztes Zuführsystem (28) des Carbonisierungskohlepulvers durch ein Trägergas bei Atmosphärendruck umfasst.

2. Verfahren nach Anspruch 1, **dadurch gekennzeichnet, dass** die Temperatur des Carbonisierungsofens (3) zwischen 400 °C und 600 °C durch Einstellen des Sauerstoffvolumens liegt und die Brennerflammentemperatur des Carbonisierungsofens (3) zwischen 1200 °C und 1800 °C durch Einstellen der Molmenge des extern angebotenen brennbaren Gases, das in den Carbonisierungsofen (3) zugeführt wird, liegt, wobei die Molmenge des extern angebotenen brennbaren Gases zwischen dem 1- und 5-fachen der Molmenge des extern angebotenen brennbaren Gases liegt, das mit dem genannten Volumen Sauerstoff vollständig verbrennt.

3. Verfahren nach Anspruch 2, **dadurch gekennzeichnet, dass** die Temperatur des Carbonisierungsofens (3) zwischen 450 °C und 550 °C durch Einstellen des Sauerstoffvolumens liegt und die Molmenge des extern angebotenen brennbaren Gases, das in den Carbonisierungsofen (3) eingeführt wird, zwischen dem 1,5- und 3-fachen der Molmenge des extern angebotenen brennbaren Gases liegt, das mit dem genannten Volumen Sauerstoff vollständig verbrennt.

4. Verfahren nach Anspruch 1 oder 2, **gekennzeichnet durch** das Verwenden des Pyrolysegases, das **durch** den Carbonisierungsofen (35) erzeugt wird, als Trägergas zum Liefern von Carbonisierungskohlepulver zum Vergasungsofen (35), wobei das Feststoff-Gas-Verhältnis der Carbonisierungskohlepulver liefernden Rohrleitungen zwischen 0,03 m³/m³ und 0,45 m³/m³ **durch** Regulieren des Volumens des Pyrolysegases für die Lieferung beträgt.

5. Verfahren nach Anspruch 1 oder 2, **dadurch gekennzeichnet, dass** das Liefern von Carbonisierungskohlepulver zum Vergasungsofen (35)zur Vergasung einen Fluidisierungsvorgang involviert, wobei das Fluidisierungsgas extern angebotenes brennbares Gas ist.

6. Verfahren nach Anspruch 1 oder 2, **dadurch gekennzeichnet, dass** ein Pyrolysegasauslass oben auf dem Carbonisierungsofen bereitgestellt ist, der mit dem Vergasungsofen (3) verbunden ist, wobei der Pyrolysegasauslass mit einem Filter (7) ausgestattet ist, wobei das extern angebotene brennbare Gas als Rückspülgas des Filters (7) während des normalen Betriebs verwendet wird.

7. Hochtemperaturvergasungssystem zur Herstellung von synthetischem Gas aus Biomasse unter Anwendung des Verfahrens nach einem der Ansprüche 1 bis 6, wobei die Temperatur des Auslasses des Vergasungsofens auf zwischen 1200 und 1600°C reguliert ist,
wobei das System ein unter Druck setzendes Zuführsystem (2) von Biomassserohmaterialien, einen Carbonisierungsofen (3), ein Carbonisierungskohlemahlsystem (23), ein Carbonisierungskohleliefersystem (28), einen Vergasungsofen (35) und dessen Verbindungsrohrleitung und pneumatisches Liefersystem umfasst, wobei der Carbonisierungsofenbrenner (6) des Carbonisierungsofens (3) mit einer Rohrleitung für extern angebotenes brennbares Gas (4) und einer Sauerstoffrohrleitung (5) verbunden ist und wobei
eine Carbonisierungskohlekühlvorrichtung (19), ein Druck abgebautes Carbonisierungskohlezuführsystem (21), das Carbonisierungskohlemahlsystem (23) und ein unter Druck gesetztes Zuführsystem für Carbonisierungskohlepulver (28) in dieser Reihenfolge entlang der Rohrleitung vom Carbonisierungskohleauslass des Carbonisierungsofens (3) zum Vergasungsofen (35) angeordnet sind, und wobei das Druck abgebaute Carbonisierungskohlezuführsystem (21) geeignet ist, den Druck von Carbonisierungskohle auf Atmosphärendruck zu reduzieren.

8. System nach Anspruch 7, **dadurch gekennzeichnet, dass** ein Pyrolysegasauslass oben am Carbonisierungsofen (3) bereitgestellt ist, der mit dem Vergasungsofen (35) verbunden ist, wobei der Pyrolysegasauslass mit einem Filter (7) ausgestattet ist und die Verbindungsvorrichtung für Rückspülgas des Filters (7) mit einer Rohrleitung (8) des extern angebotenen brennbaren Gases verbunden ist.

## Revendications

1. Procédé de gazéification haute température pour produire un gaz de synthèse à partir d'une biomasse, dans lequel la température de la sortie du four de gazéification est régulée entre 1200 et 1600°C, comprenant les étapes consistant à :
alimenter une matière première, réaliser une carbonisation, broyer du charbon et introduire la poudre de charbon dans le four de gazéification (3) pour réaliser la gazéification,
**caractérisé en ce que** ladite carbonisation comprend la mise en réaction directe d'une combustion d'un gaz combustible introduit de manière externe et d'oxygène dans le four de carbonisation (3), la chaleur émise par la réaction étant directement fournie à la chaleur nécessaire de la pyrolyse de la biomasse, et la production de gaz de pyrolyse et de charbon à partir du four de carbonisation (3),
dans lequel le procédé dudit broyage de charbon comprend la réduction de la pression du charbon à la pression atmosphérique par le biais d'un dispositif d'alimentation de charbon dépressurisé (21), et ensuite la distribution du charbon à un mécanisme de broyage (23) pour produire une poudre de charbon, et ensuite la distribution de la poudre de charbon à un système d'alimentation pressurisé (28) de la poudre de charbon par un gaz vecteur à la pression atmosphérique.

2. Procédé selon la revendication 1, **caractérisé en ce que** la température dudit four de carbonisation (3) est comprise entre 400 °C et 600 °C par ajustement du volume d'oxygène et la température de la flamme du brûleur dudit four de carbonisation (3) est comprise entre 1200 °C et 1800 °C par ajustement de la quantité molaire dudit gaz combustible fourni de manière externe alimenté dans le four de carbonisation (3), la quantité molaire dudit gaz combustible fourni de manière externe étant comprise entre 1 et 5 fois la quantité molaire dudit gaz combustible fourni de manière externe qui brûle complètement avec ledit volume d'oxygène.

3. Procédé selon la revendication 2, **caractérisé en ce que** la température dudit four de carbonisation (3) est comprise entre 450 °C et 550 °C par ajustement du volume d'oxygène et la quantité molaire dudit gaz combustible fourni de manière externe alimenté dans le four de carbonisation (3) est comprise entre 1,5 et 3 fois la quantité molaire dudit gaz combustible fourni de manière externe qui brûle complètement avec ledit volume d'oxygène.

4. Procédé selon la revendication 1 ou 2, **caractérisé en ce que** pour l'utilisation du gaz de pyrolyse produit par le four de carbonisation (3) en tant que gaz vecteur pour distribuer la poudre de charbon dans le four de gazéification (35), le rapport solide-gaz des conduites de distribution de poudre de charbon est compris entre 0,03 m³/m³ et 0,45 m³/m³ par régulation du volume du gaz de pyrolyse pour la distribution.

5. Procédé selon la revendication 1 ou 2, **caractérisé en ce que** ladite distribution de la poudre de charbon dans le four de gazéification (35) pour réaliser la gazéification implique un procédé de fluidisation, le gaz de fluidisation étant le gaz combustible fourni de manière externe.

6. Procédé selon la revendication 1 ou 2, **caractérisé en ce qu'**une sortie de gaz de pyrolyse est fournie sur le dessus du four de carbonisation qui est relié au four de gazéification (3), la sortie de gaz de pyrolyse étant équipée d'un filtre (7), le gaz combustible fourni de manière externe étant utilisé en tant que gaz de rétrobalayage du filtre (7) pendant un fonctionnement normal.

7. Système de gazéification haute température pour produire un gaz de synthèse à partir d'une biomasse en utilisant le procédé selon l'une quelconque des revendications 1 à 6, dans lequel la température de la sortie du four de gazéification est régulée entre 1200 et 1600 °C, le système comprenant un système d'alimentation pressurisé (2) de biomasses en tant que matières premières, un four de carbonisation (3), un système de broyage de charbon (23), un système de distribution de charbon (28), un four de gazéification (35) et sa conduite de raccordement et un système de distribution pneumatique, dans lequel le brûleur de four de carbonisation (6) dudit four de carbonisation (3) est relié à une conduite de gaz combustible fourni de manière externe (4) et à une conduite d'oxygène (5), et dans lequel
un refroidisseur de charbon (19), un système d'alimentation de charbon dépressurisé (21), le système de broyage de charbon (23) et un système d'alimentation pressurisé de poudre de charbon (28) sont successivement fournis le long de la conduite de la sortie du charbon du four de carbonisation (3) vers le four de gazéification (35), et dans lequel le système d'alimentation de charbon dépressurisé (21) est adapté pour réduire la pression du charbon à la pression atmosphérique.

8. Système selon la revendication 7, **caractérisé en ce qu'**une sortie de gaz de pyrolyse est fournie sur le dessus du four de carbonisation (3) qui est relié au four de gazéification (35), la sortie de gaz de pyrolyse étant équipée d'un filtre (7), et le raccord du gaz de rétrobalayage du filtre (7) étant relié à une conduite (8) du gaz combustible fourni de manière externe.
